# EUROPÄISCHE PATENTSCHRIFT

(11) **EP 3 524 368 B1**
(45) Veröffentlichungstag und Bekanntmachung des Hinweises auf die Patenterteilung: **09.12.2020**
(21) Anmeldenummer: 19152134.3
(22) Anmeldetag: 16.01.2019
(51) Int. Cl.: B21D 39/03

(54) **WERKZEUGTRÄGER FÜR EINE DURCHSETZFÜGEVORRICHTUNG**
TOOL HOLDER FOR A CLINCH JOINING DEVICE
PORTE-OUTIL POUR UN DISPOSITIF D'ASSEMBLAGE À MI-FER

(30) Priorität: 09.02.2018 DE 102018103000
(43) Veröffentlichungstag der Anmeldung: 14.08.2019
(73) Patentinhaber: Eckold GmbH & Co. KG, 37444 St. Andreasberg (DE)
(72) Erfinder: UNGER, Florian, 37431 Bad Lauterberg (DE)
(74) Vertreter: Gramm, Lins & Partner Patent- und Rechtsanwälte PartGmbB

(56) Entgegenhaltungen:
- DE-A1-102006 028 568
- DE-A1-102014 016 130
- US-A- 5 208 974

## Beschreibung

Die Erfindung betrifft einen Werkzeugträger für eine Durchsetzfügeinrichtung mit einem eine Längsachse aufweisenden Gehäuse, in dem koaxial ineinander ein von einer ersten Druckfeder beaufschlagter Niederhalter, ein von einer zweiten Druckfeder beaufschlagter Außenstempel und ein starr mit dem Gehäuse verbundener Innenstempel angeordnet sind, die mit ihren freien Enden aus dem Gehäuse herausgeführt sind.

Eine Durchsetzfügevorrichtung mit einem solchen Werkzeugträger ist beispielsweise aus der DE 10 2006 028 568 A1 bekannt. Dieser Werkzeugträger besitzt eine Stempeleinheit mit zwei zueinander konzentrisch angeordneten Stempeln, wobei der Au-ßenstempel mit einem ersten Kraftübertragungssystem zur Übertragung einer ersten Umformkraft bis zu einer ersten Maximalkraft im Bereich der Matrize und der Innenstempel mit einem zweiten Kraftübertragungssystem zur Übertragung einer zweiten Umformkraft bis zu einer zweiten Maximalkraft im Bereich des Ambosses in Verbindung steht. Hierbei wirkt die jeweilige Umformkraft auf die zugehörigen Bereiche der überlappt angeordneten Fügeteile zur Herstellung einer Durchsetzfügeverbindung (Clinchverbindung bzw. Schneidclinchverbindung).

Die Unterteilung der Stempeleinheit in einen Innenstempel und einen Außenstempel mit jeweiliger maximaler Umformkraft begünstigt eine in unterschiedlichen Umformungsbereichen differenzierte und korrekte Materialumformung der Fügeteile und somit die Herstellung einer fehlerfreien Fügeverbindung zwischen diesen. Mittels der zugehörigen Kraftübertragungssysteme wird eine geeignete jeweils Umformkraft in den entsprechenden Bereich der Fügeteile zu einem erwünschten Zeitpunkt und für eine bevorzugte Zeitdauer eingeleitet. Zur Schonung bzw. Verhinderung einer plastischen Verformung des stempelseitigen Fügeteils wird der Außenstempel von dem Niederhalter umgeben, der, wenn der Werkzeugträger auf die Fügeteile zufährt, in entgegengesetzter Richtung in das Gehäuse eingeschoben wird.

Das erste Kraftübertragungssystem zur Übertragung der ersten Umformkraft setzt sich zusammen aus der von der Antriebseinheit aufgebrachten Fügekraft und einer von einer Gummifeder aufgebrachten Rückstellkraft. Das zweite Kraftübertragungssystem wird durch die unmittelbar auf den Innenstempel wirkende Antriebskraft des Werkzeugträgers gebildet. Durch die gewählte Federanordnung baut der Werkzeugträger recht groß.

Aus der DE 10 2016 111 616 A1 ist eine Vorrichtung zum Setzen eines Fügeelementes an einem Werkstück oder zum Durchsetzfügen des Werkstücks bekannt, das neben einer Stempeleinheit und einer gegenüberliegenden Matrizeneinheit einen in Fügerichtung bewegbaren Stempel und einen am Werkstück andrückbaren Niederhalter aufweist. Die Matrizeneinheit ist mit Anlagemitteln zur Anlage am Werkstück versehen. In einer Ausrückstellung der Matrizeneinheit stehen die Anlagemittel in Richtung zur Stempeleinheit über den Matrizenabschnitt hervor und in einer Absenkstellung der Matrizeneinheit ist eine matrizenseitige Werkstückseite an den Anlagemitteln und an dem Matrizenabschnitt abstützbar.

Die DE 10 2014 016 131 A1 offenbart eine Fügevorrichtung zum Fügen von wenigstens zwei überlappend angeordneten Bauteilen mit einer Schneidmatrize zum Stanzen eines ersten der Bauteile unter Bildung eines Stanzbutzens, mit einem konzentrisch zur Schneidmatrize angeordneten und relativ zu dieser translatorisch bewegbaren Amboss und mit einem relativ zur Schneidmatrize translatorisch bewegbaren Stempelelement zum Aufbringen einer Stanzkraft und zum anschließenden Durchsetzfügen des zweiten Bauteils mit dem ersten Bauteil. Zum Halten des Stanzbutzens ist ein Magnet vorgesehen.

Die DE 100 21 781 A1 beschreibt ein Fügewerkzeug zum Fügen mindestens zweier Werkstücke aus duktilem Material. Das Werkzeug besteht aus einem Rahmen, einer Matrize, einem Fügestempel, einem Niederhalter und einem Antrieb für den Fügestempel und Niederhalter. Der Rahmen besteht aus einem oberen Rahmenteil und einem unteren Rahmenteil. Das obere Rahmenteil ist als einseitig offenes und im Übrigen geschlossenes Gehäuse und das untere Rahmenteil ist c-förmig ausgebildet. Der Antrieb besteht aus einem im Inneren des oberen Rahmenteils angeordneten pneumatisch betätigten Stellzylinder und einem den Stellzylinder mit dem Fügestempel und dem Niederhalter verbindenden Kraftübertragungsmechanismus.

Aus der DE 10 2014 113 438 A1 ist ein Verfahren zum Verbinden eines oberen Blechteils und eines unteren Blechteils, von denen mindestens eines als Organoblechteil ausgeführt ist, mit Hilfe eines Hilfsfügeteils und einer gelochten Metallscheibe bekannt.

Aus der US 5,208,974 A ist eine Clinchvorrichtung bekannt, mit der ein Gewindeeinsatz mit einem Blech verbunden werden kann, ohne das Blechmaterial zu scheren. Damit wird eine sichere ineinandergreifende Verbindung geschaffen, an der andere Gegenstände angeschraubt werden können.

Die DE 10 2004 016 130 A offenbart eine Vorrichtung zum Durchsetzfügen zweier Fügeteile, bei der ein Niederhalter auf seiner beim Verbinden dem zweiten Fügeteil zugewandten Stirnseite mit einem in Umfangsrichtung des Niederhalters zumindest teilweise umlaufenden Stützprofil versehen ist, über das ein einer Deformation zumindest des zweiten Fügeteils entgegenwirkendes Gegenmoment auf das zweite Fügeteile aufbringbar ist.

Hiervon ausgehend liegt der Erfindung die Aufgabe zugrunde, den benötigten Bauraum für den Werkzeugträger zu verkleinern.

Zur Lösung dieser Aufgabe zeichnet sich ein gattungsgemäßer Werkzeugträger dadurch aus, dass die erste Druckfeder koaxial innerhalb der zweiten Druckfeder angeordnet ist.

Durch diese Ausgestaltung wird zunächst der in axialer Richtung benötigte Bauraum reduziert. Außerdem kann die für den Außenstempel vorgesehene Druckfeder als Spiralfeder ausgebildet werden, die deutlich höhere Kräfte gegenüber einer Gummifeder bei geringerem Volumen aufnehmen kann.

Vorzugsweise stützt sich die zweite Druckfeder auf einer mit dem Außenstempel in Wirkverbindung stehenden hohlzylindrischen Hülse ab, in deren Innenbohrung ein mit dem Niederhalter in Wirkverbindung stehender erster Ring gleitend aufgenommen ist, auf dem sich die erste Druckfeder abstützt, wobei der erste Ring eine zentrale Bohrung aufweist, durch die der Innenstempel hindurchgeführt ist.

Durch diese Ausgestaltung kann die Kraft der zweiten Druckfeder über die hohlzylindrische Hülse an den Außenstempel und die Kraft der ersten Druckfeder über den Ring an den Niederhalter geleitet werden.

Wenn die Hülse in ihrer Innenbohrung einen umlaufenden Absatz aufweist, der mit einer Mehrzahl axialer Bohrungen versehen ist, durch die jeweils ein Stift hindurchgeführt ist, der axial mit seinem einen Ende am ersten Ring und mit seinem anderen Ende am Niederhalter anliegt, wird die Kraftübertragung von der ersten Druckfeder auf den Niederhalter vereinfacht.

Zwischen dem umlaufenden Absatz der Hülse und dem ersten Ring kann ein zweiter Ring angeordnet sein. Der Außendurchmesser des zweiten Ringes ist vorzugsweise kleiner als der von der Mehrzahl Stiften ausgebildete Innenkreis und der zweite Ring kann sich am ersten Ring und dem umlaufenden Absatz abstützen, sodass dieser als Abstandshalter und zur Führung der Stifte dienen kann.

Vorzugsweise ist das Gehäuse zumindest zweiteilig ausgebildet und auf einen oberen mit einer Werkzeugmaschine verbindbaren Teil ist ein unterer mit einer zentralen Bohrung versehener Teil aufschraubbar.

Die Montage des Gehäuses wird vereinfacht, wenn dieses dreiteilig ausgebildet ist und in den oberen Teil ein innerer, den Innenstempel aufweisender Innenteil einschraubbar oder anschraubbar ist.

Mit Hilfe einer Zeichnung soll ein Ausführungsbeispiel der Erfindung nachfolgend näher beschrieben werden. Es zeigen:

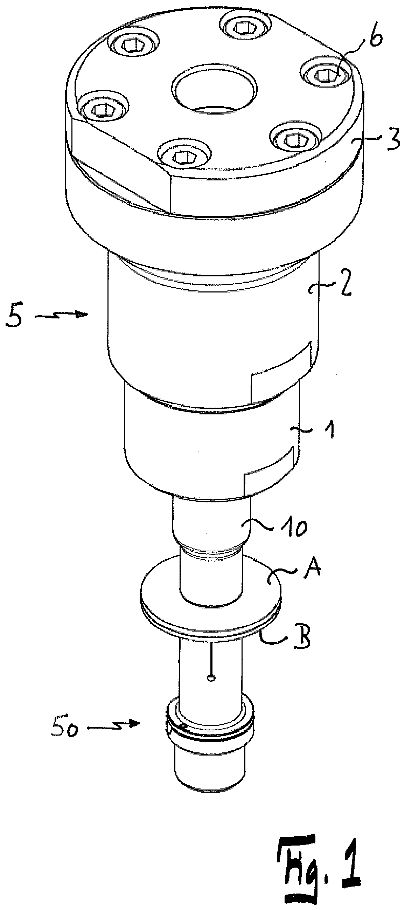

- Figur 1 -: die perspektivische Darstellung einer Durchsetzfügeeinrichtung bestehend aus Werkzeugträger und Matrize;

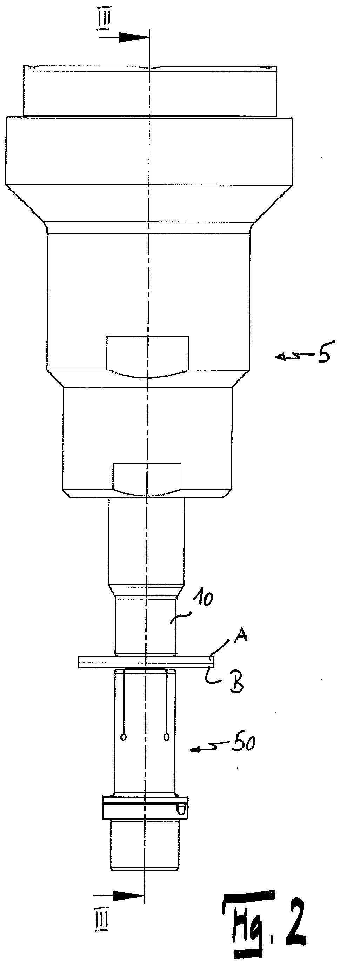

- Figur 2 -: eine Ansicht der Durchsetzfügeeinrichtung nach Figur 1 ;

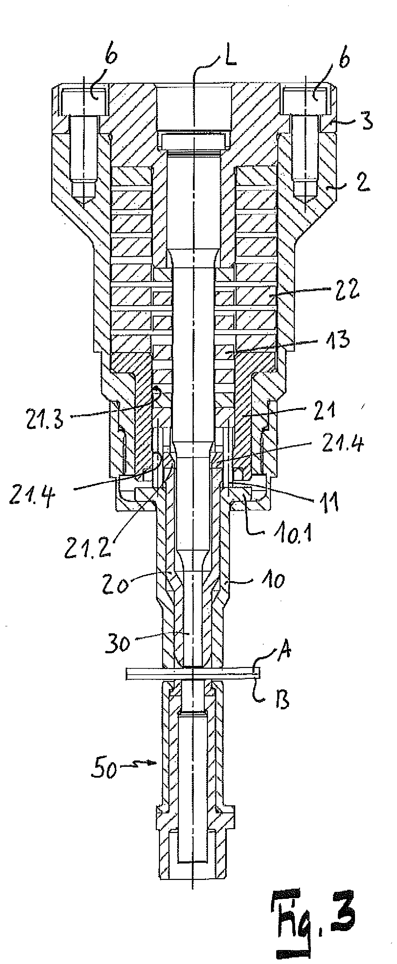

- Figur 3 -: den Schnitt entlang der Linie III-III nach Figur 2;

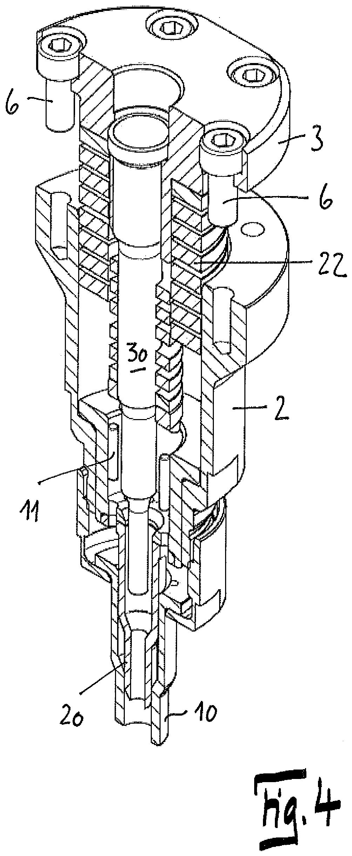

- Figur 4 -: einen perspektivischen Längsschnitt durch den Werkzeugträger nach Figur 1;

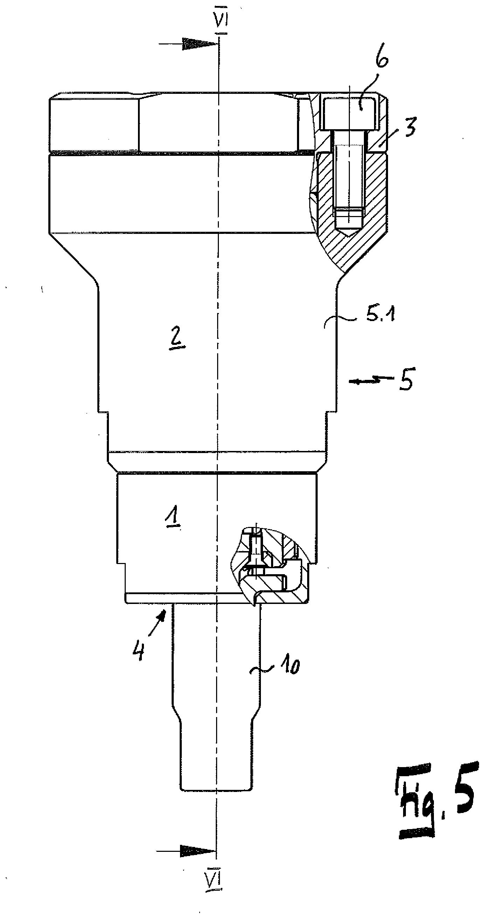

- Figur 5 -: die Ansicht eines Werkzeugträgers;

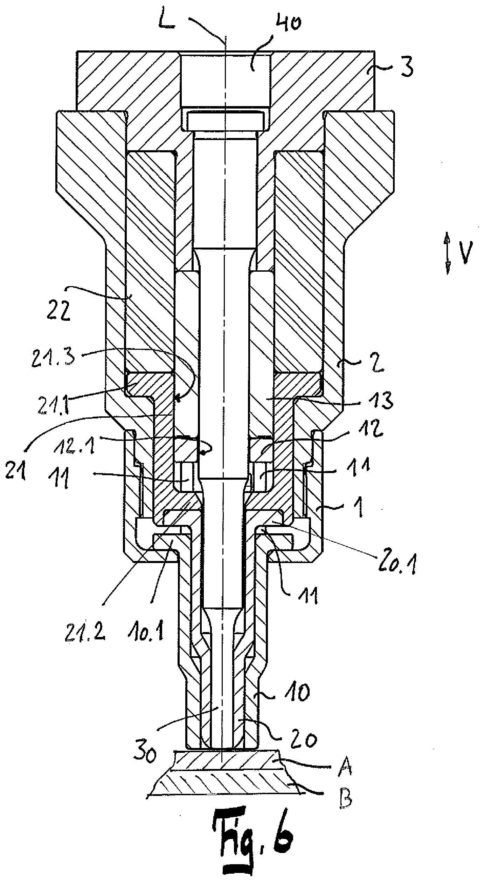

- Figur 6 -: den Schnitt entlang der Linie VI-VI des Werkzeugträgers nach Figur 5;

Die Durchsetzfügeeinrichtung besteht aus dem Werkzeugträger 5 und der Matrize 50. Zwischen dem Werkzeugträger 5 und der Matrize 50 werden die zu fügenden Bauteile A, B eingelegt und dann über die im Werkzeugträger 5 aufgenommenen Werkzeuge 20, 30 durch Umformung miteinander verbunden.

Der Werkzeugträger 5 besteht aus dem dreiteiligen Gehäuse 5.1, dessen unterer, mit einer zentralen Bohrung 4 versehener Teil 1 auf den oberen Teil 2 aufschraubbar und dessen Innenteil 3 mit dem oberen Teil 2 mittels mehrerer Schrauben 6 verschraubt oder in diesen eingesetzt ist.

In das Gehäuse 5.1 sind ineinander verschachtelt und zueinander koaxial angeordnet ein Niederhalter 10, ein Außenstempel 20 und Innenstempel 30 vorgesehen. Der Innenstempel 30 ist in das Innenteil des Gehäuseteiles 3 eingesetzt und steht über dieses unmittelbar in Verbindung mit dem Stößel 40 der hier nicht näher dargestellten Werkzeugmaschine, die den Werkzeugträger 5 in axialer Richtung V antreibt. Der Außenstempel 20 kann sich gegenüber dem Innenstempel 30 in vertikaler Richtung V bewegen. Der Außenstempel 20 wird von dem Niederhalter 10 umgeben, der sich gegenüber dem Außenstempel 20 in vertikaler Richtung V bewegen kann. Der Au-ßenstempel 20 steht über die Hülse 21 mit einer Druckfeder 22 in Verbindung, der Niederhalter 10 steht über auf einem Kreis angeordneten Stifte 11 und einem Ring 12 mit der Druckfeder 13 in Verbindung.

Die Hülse 21 ist hohlzylindrisch ausgebildet mit einem oberen Flansch 21.1 und einem unteren in die Innenbohrung 21.3 hineinragenden umlaufenden Absatz 21.2, der einen nach innen gerichteten Flansch ausbildet. In dem unteren Absatz 21.2 sind eine Mehrzahl von Bohrungen 21.4 vorgesehen, durch die Stifte 11 hindurchlaufen, die sich auf dem Flansch 10.1 des Niederhalters 10 abstützen. Mit ihrem anderen Ende liegen die Stifte 10 an einem, eine Innenbohrung 12.1 aufweisenden Ring 12 an, der sich gegen die Druckfeder 13 abstützt.

Der Außenstempel 20 ist an seinem im Gehäuse 5.1 befindlichen Ende zu einem Flansch 20.1 verbreitert. Um die beiden Fügeteile A, B miteinander zu verbinden, wird der Werkzeugträger 5 auf das diesem zugewandten Fügeteil A zugefahren.

Wenn der Werkzeugträger 5 auf das obere Fügeteile A aufsetzt und weiter zugefahren wird, wirkt auf die Fügeteile A, B die vom Stößel 40 aufgebrachte Fügekraft. Der Niederhalter 10 wird über die Stifte 11 und den Ring 12 gegen die Kraft der Druckfeder 13 in die entgegengesetzte vertikale Richtung V (auf der Zeichnung nach oben) in das Gehäuse 5.1 hineingeschoben, während der Außenstempel 20 und der Innenstempel 30 weiter in Richtung der Fügeteile A, B zugefahren werden. Bei Erreichen einer bestimmten Kraft schiebt sich der Außenstempel 20 der mit seinem Flansch 20.1 an der Hülse 21 anliegt zusammen mit der Hülse 21 gegen die Kraft der Druckfeder 22 in das Innere des Gehäuses 5.1 ein, während der Innenstempel 30 weiter auf die Fügeteile A, B zufährt und die Durchsetzfügeverbindung herstellt, indem er in die Matrize 50 einfährt.

### Bezugszeichenliste

- 1: Gehäuseteil/unteres Teil
- 2: Gehäuseteil/oberes Teil
- 3: Gehäuseteil/Innenteil
- 4: Bohrung
- 5: Werkzeugträger
- 5.1: Gehäuse
- 6: Schrauben
- 10: Niederhalter
- 10.1: Flansch
- 11: Stift
- 12: Ring
- 12.1: Innenbohrung
- 13: Druckfeder
- 20: Außenstempel
- 20.1: Flansch
- 21: Hülse
- 21.1: Flansch
- 21.2: umlaufender Absatz
- 21.3: Innenbohrung
- 21.4: Bohrung
- 22: Druckfeder
- 30: Innenstempel
- 40: Stößel
- 50: Matrize
- A: Fügeteil
- B: Fügeteil
- L: Längsachse
- V: vertikale Richtung

## Patentansprüche

1. Werkzeugträger (5) für eine Durchsetzfügeinrichtung mit einem eine Längsachse (L) aufweisenden Gehäuse (5), in dem koaxial ineinander
- ein von einer ersten Druckfeder (13) beaufschlagter Niederhalter (10),
- ein von einer zweiten Druckfeder (22) beaufschlagter Außenstempel (20) und
- ein starr mit dem Gehäuse (5.1) verbundener Innenstempel (30) angeordnet sind, die mit ihren freien Enden aus dem Gehäuse (5.1) herausgeführt sind
**dadurch gekennzeichnet, dass**
die erste Druckfeder (13) koaxial innerhalb der zweiten Druckfeder (22) angeordnet ist.

2. Werkzeugträger (5) nach Anspruch 1, **dadurch gekennzeichnet, dass** die zweite Druckfeder (22) sich auf einer mit dem Außenstempel (20) in Wirkverbindung stehenden hohlzylindrischen Hülse (21) abstützt, in deren Innenbohrung (21.3) ein mit dem Niederhalter (10) in Wirkverbindung stehender erster Ring (12) gleitend aufgenommen ist, auf dem sich die erste Druckfeder (13) abstützt, und dass der erste Ring (12) eine zentrale Bohrung (12.1) aufweist, durch die der Innenstempel (30) hindurchgeführt ist.

3. Werkzeugträger (5) nach Anspruch 2, **dadurch gekennzeichnet, dass** die Hülse (21) in ihrer Innenbohrung (24) einen umlaufenden Absatz (21.2) aufweist, der mit einer Mehrzahl axialer Bohrungen (21.4) versehen ist, durch die jeweils ein Stift (11) hindurchgeführt ist, der mit seinem einen Ende am ersten Ring (12) und mit seinem anderen Ende am Niederhalter (10) anliegt.

4. Werkzeugträger nach Anspruch 3, **dadurch gekennzeichnet, dass** zwischen dem umlaufenden Absatz (21.2) der Hülse (21) und dem ersten Ring (12) ein zweiter Ring angeordnet ist.

5. Werkzeugträger nach Anspruch 4, **dadurch gekennzeichnet, dass** der Außendurchmesser des zweiten Ringes kleiner ist als der von der Mehrzahl der Stifte (11) ausgebildete Kreis und der zweite Ring sich am ersten Ring (12) und dem umlaufenden Absatz (21.2) abstützt.

6. Werkzeugträger nach einem der vorstehenden Ansprüche, **dadurch gekennzeichnet, dass** das Gehäuse (5.1) zweiteilig ausgebildet ist und auf einen mit einer Werkzeugmaschine verbindbaren oberen Teil (2) ein unterer mit einer zentralen Bohrung (4) versehener Teil (1) aufschraubbar ist.

7. Werkzeugträger (5) nach Anspruch 6, **dadurch gekennzeichnet, dass** das Gehäuse (5.1) dreiteilig ausgebildet ist und in den oberen Teil (2) ein inneres, den Innenstempel (30) aufweisendes Innenteil (3) einschraubbar oder anschraubbar ist.

## Claims

1. Tool carrier (5) for a clinching installation, having a housing (5) having a longitudinal axis (L), in which housing (5)
- a hold-down (10) which is impinged by a first compression spring (13),
- an outer die (20) which is impinged by a second compression spring (22), and
- an inner die (30) which is rigidly connected to the housing (5.1) are disposed coaxially within one another so as to be routed out of the housing (5.1) by way of their free ends,
**characterized in that**
the first compression spring (13) is disposed so as to be coaxial within the second compression spring (22).

2. Tool carrier (5) according to claim 1, **characterized in that in that** the second compression spring (22) is supported on a hollow-cylindrical sleeve (21) which is operatively connected to the outer die (20), a first ring (12) which is operatively connected to the hold-down (10) being received in a sliding manner in the internal bore (21.3) of said hollow-cylindrical sleeve (21), the first compression spring (13) being supported on said first ring (12), and **in that** the first ring (12) has a central bore (12.1) through which the inner die (30) is routed.

3. Tool carrier (5) according to claim 2, **characterized in that** the sleeve (21) in the internal bore (24) thereof has an encircling shoulder (21.2) which is provided with a plurality of axial bores (21.4) through which in each case one pin (11) is routed, said pin (11) by way of one end thereof bearing on the first ring (12) and by way of the other end thereof bearing on the hold-down (10).

4. Tool carrier according to claim 3, **characterized in that** a second ring is disposed between the encircling shoulder (21.2) of the sleeve (21) and the first ring (12).

5. Tool carrier according to claim 4, **characterized in that** the external diameter of the second ring is smaller than the circle configured by the plurality of pins (11), and the second ring is supported on the first ring (12) and the encircling shoulder (21.2).

6. Tool carrier according to one of the preceding claims, **characterized in that** the housing (5.1) is configured in two parts, and a lower part (1) provided with a central bore (4) is capable of being screw-fitted onto an upper part (2) that is connectable to a machine tool.

7. Tool carrier (5) according to claim 6, **characterized in that** the housing (5.1) is configured in three parts, and an inner internal part (3) that comprises the inner die (30) is capable of being screw-fitted into or onto the upper part (2).

## Revendications

1. Porte-outil (5) pour un dispositif d'assemblage avec interpénétration, comportant un boîtier (5) qui présente un axe longitudinal (L) et dans lequel sont disposés coaxialement les uns dans les autres :
- un dispositif de maintien vers le bas (10) sollicité par un premier ressort de compression (13),
- un poinçon extérieur (20) sollicité par un second ressort de compression (22), et
- un poinçon intérieur (30) relié rigidement au boîtier (5.1),
dont les extrémités libres sortent du boîtier (5.1),
**caractérisé en ce que**
le premier ressort de compression (13) est disposé coaxialement à l'intérieur du second ressort de compression (22).

2. Porte-outil (5) selon la revendication 1,
**caractérisé en ce que** le second ressort de compression (22) s'appuie sur une douille cylindrique creuse (21) qui est en liaison active avec le poinçon extérieur (20) et dans le perçage intérieur (21.3) de laquelle est logée en glissement une première bague (12) qui est en liaison active avec le dispositif de maintien vers le bas (10) et sur laquelle s'appuie le premier ressort de compression (13), et
**en ce que** la première bague (12) présente un perçage central (12.1) à travers lequel est passé le poinçon intérieur (30).

3. Porte-outil (5) selon la revendication 2,
**caractérisé en ce que** la douille (21) présente dans son perçage intérieur (24) un épaulement périphérique (21.2) qui est pourvu d'une pluralité de perçages axiaux (21.4) à travers lesquels passe respectivement une tige (11) qui repose par une extrémité sur la première bague (12) et par son autre extrémité sur le dispositif de maintien vers le bas (10).

4. Porte-outil selon la revendication 3,
**caractérisé en ce qu'**une seconde bague est disposée entre l'épaulement périphérique (21.2) de la douille (21) et la première bague (12).

5. Porte-outil selon la revendication 4,
**caractérisé en ce que** le diamètre extérieur de la seconde bague est plus petit que le cercle formé par la pluralité des tiges (11), et la seconde bague s'appuie sur la première bague (12) et sur l'épaulement périphérique (21.2).

6. Porte-outil selon l'une des revendications précédentes,
**caractérisé en ce que** le boîtier (5.1) est réalisé en deux parties et une partie inférieure (1) pourvue d'un perçage central (4) peut être vissée sur une partie supérieure (2) qui peut être reliée à une machine-outil.

7. Porte-outil (5) selon la revendication 6,
**caractérisé en ce que** le boîtier (5.1) est réalisé en trois parties et une partie intérieure (3) comportant le poinçon intérieur (30) peut être vissée dans ou sur la partie supérieure (2).
